# EUROPÄISCHE PATENTSCHRIFT

(11) **EP 2 353 977 B1**
(45) Veröffentlichungstag und Bekanntmachung des Hinweises auf die Patenterteilung: **28.11.2012**
(21) Anmeldenummer: 10197341.0
(22) Anmeldetag: 30.12.2010
(51) Int. Cl.: B62D 55/24, A63H 17/14

(54) **Laufkette für ein Spielfahrzeug**
Track for a toy vehicle
Chenille pour véhicule-jouet

(30) Priorität: 01.02.2010 DE 102010001426
(43) Veröffentlichungstag der Anmeldung: 10.08.2011
(73) Patentinhaber: Bruder Spielwaren GmbH + Co. KG, 90768 Fürth (DE)
(72) Erfinder: Bruder, Paul Heinz, 90768, Fürth (DE)
(74) Vertreter: Rau, Schneck & Hübner

(56) Entgegenhaltungen:
- DE-U1- 29 818 131
- JP-A- 2002 239 260
- JP-A- 2007 290 632
- US-A- 3 065 569

## Beschreibung

Die Erfindung betrifft eine Laufkette für ein Spielfahrzeug. Ferner richtet sich die Erfindung auf ein Spielfahrzeug mit mindestens einer entsprechenden Laufkette.

Spielfahrzeuge mit Laufkette mit einzelnen, voneinander lösbaren Gliedern sind aus der WO 2008/112 043 A2 bekannt. Die Laufketten sind im Allgemeinen um Lauflcettenräder geführt, die an einem Spielfahrzeug-Grundkörper gelagert sind. Die Montage und Demontage der Laufketten erfordert im Allgemeinen ein größeres handwerkliches Geschick. Kinder sind oftmals mit der Montage bzw. Demontage der Laufketten überfordert.

Aus der DE 2 408 354 A ist eine Gleiskette mit einzelnen, voneinander lösbaren Gliedern bekannt.

Aus der gattungsgemäßen US 3 0605 569 A ist ein Spielzeugpanzer mit einer Laufkette mit einstückig zusammenhängender Lauffläche bekannt. Die beiden Enden des Laufbandes sind mittels einer Verschlusseinrichtung formschlüssig miteinander verbindbar, wobei an einem ersten Ende des Laufbandes nebeneinander angeordnete Stifte vorgesehen sind, die mit Durchbrechungen an dem zweiten Ende zusammen wirken.

Aus der JP 2007 290 632 A ist eine endlose Laufkette bekannt, dessen Enden über ein separates Verbindungsbauteil miteinander verbindbar sind. Weitere Laufketten für Spielfahrzeuge sind bekannt aus der JP 2002 239 260 A und der DE 298 18 131 U1.

Der Erfindung liegt die Aufgabe zugrunde, eine Laufkette bereitzustellen, die einfach montierbar bzw. demontierbar ist. Ein entsprechendes Spielfahrzeug mit mindestens einer derartigen Laufkette soll ebenfalls geschaffen werden.

Diese Aufgabe wird erfindungsgemäß durch die in den Ansprüchen 1 und 7 angegebenen Merkmale gelöst. Der Kern der Erfindung liegt darin, dass die Laufkette eine Verschlussvorrichtung zum Schließen des Laufbands aufweist, wobei die Verschlussvorrichtung eine an einem ersten Stirnende des Laufbands vorgesehene erste Verschlusseinrichtung und eine an einem zweiten Stirnende vorgesehene zweite Verschlusseinrichtung aufweist. Durch die Verschlussvorrichtung kann das Laufband geschlossen werden, um ein endloses, geschlossenes Laufband bzw. eine endlose, geschlossene Laufkette zu bilden. Das Laufband der Laufkette hat eine einstückig zusammenhängende Lauffläche, weist also keine Mehr- bzw. Vielzahl von voneinander lösbaren einzelnen Gliedern auf. Das Laufband kann insgesamt einstückig ausgeführt sein. Das Laufband und insbesondere die einstückig zusammenhängende Lauffläche von diesem sind elastisch ausgeführt. An einem Verbindungspunkt der Verschlussvorrichtung zum Schließen des Laufbandes muss nicht zwingend eine Gelenkigkeit vorliegen. Die Verschlussvorrichtung kann also zwischen den dort miteinander verbundenen Enden des Laufbandes eine biegesteife Verbindung vorgeben. Dies ist aufgrund der Elastizität des Laufbandes möglich. Dadurch, dass die erste Verschlusseinrichtung mindestens ein erstes Verschlussmittel und die zweite Verschlusseinrichtung mindestens ein zweites Verschlussmittel zur lösbaren Verbindung mit dem ersten Verschlussmittel umfasst, wird eine äußerst funktionssichere Verbindung zwischen der ersten Verschlusseinrichtung und der zweiten Verschlusseinrichtung geschaffen. Es kann ein erstes bzw. zweites Verschlussmittel oder mehrere erste bzw. zweite Verschlussmittel vorgesehen sein. Durch die Ausbildung des mindestens einen ersten Verschlussmittels als Ausnehmung und des mindestens zweiten Verschlussmittels als Eingriffskörper zum Eingreifen in die Ausnehmung ergibt sich eine besonders einfach aufgebaute, aber dennoch äußerst funktionssichere Verschlussvorrichtung. Die Ausnehmung und der Eingriffskörper können aber auch getauscht angeordnet sein. Der zweckdienlich ausgestaltete Eingriffskörper ermöglicht, dass dieser besonders gut in der Ausnehmung örtlich festlegbar bzw. fixierbar ist. Vorzugsweise ist der Eingriffskörper sowohl in Richtung des Laufbands als auch quer zu diesem fixiert. Anstelle einer stufenförmigen bzw. treppenförmigen Ausgestaltung kann der Eingriffskörper auch klauenförmig ausgebildet sein, um vorzugsweise das mindestens eine Verschlussmittel mindestens teilweise zu umgreifen bzw. zu hintergreifen.

Weitere vorteilhafte Ausgestaltungen sind in den Unteransprüchen angegeben.

Durch die vorteilhafte Ausgestaltung nach Anspruch 2 wird die Verbindung zwischen der ersten Verschlusseinrichtung und der zweiten Verschlusseinrichtung weiter verbessert.

Die zweckmäßige Ausgestaltung nach Anspruch 3 führt zu einem besonders sicheren Anschluss der ersten bzw. zweiten Verschlusseinrichtung an das Laufband.

Die zweckdienliche Ausgestaltung nach Anspruch 4 führt zu einer besonders sicheren Aufnahme des Eingriffskörpers.

Die vorteilhafte Ausgestaltung nach Anspruch 5 ermöglicht eine besonders funktionssichere Führung der Laufkette. Vorzugsweise sind die Führungskörper paarweise angeordnet. Insbesondere weisen die Führungskörper-Paare einen konstanten Abstand zueinander auf.

Die bevorzugte Ausgestaltung nach Anspruch 6 führt zu einem äußerst problemlosen Betrieb, vorzugsweise Spielbetrieb, der Laufkette. Vorzugsweise ist das Laufband aus einem flexiblen bzw. biegsamen Material gebildet, während die Verschlussvorrichtung aus einem im Wesentlichen steifen Material gebildet ist. Vorzugsweise sind die erste Verschlusseinrichtung und die zweite Verschlusseinrichtung im Wesentlichen jeweils starrer bzw. steifer als das Laufband. Das Laufband kann aus einem Gummimaterial oder einem gummiähnlichen Material gebildet sein, während die Verschlussvorrichtung aus einem Kunststoffmaterial gebildet ist. Hierdurch wird erreicht, dass die Verschlussvorrichtung eine besonders hohe Verschlusskraft hat, während das Laufband eine hohe Anpassungsfähigkeit hat und sich besonders gut führen lässt.

Das Spielfahrzeug kann ein beliebiges Kettenfahrzeug oder Halbkettenfahrzeug sein. Es kann als Raupe, Bagger, Panzer oder dergleichen ausgestaltet sein. Mit dem Spielfahrzeug können Kinder und/oder Erwachsene spielen. Es kann aber auch lediglich ein Miniaturmodell sein.

Nachfolgend wird unter Bezugnahme auf die beigefügte Zeichnung eine bevorzugte Ausführungsform der Erfindung beispielhaft beschrieben. Dabei zeigen:
- Fig. 1: eine schematische Ansicht eines Fahrgestells eines Spielfahrzeug-Grundkörpers, an dem zwei erfindungsgemäße Laufketten angebracht sind,

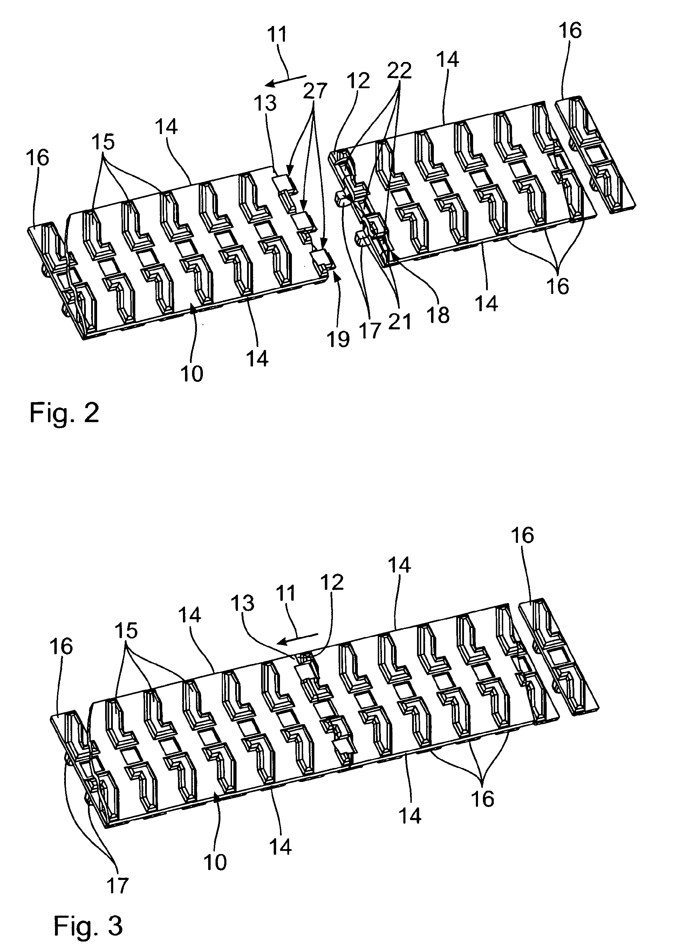

- Fig. 2: einen Abschnitt einer in Fig. 1 gezeigten, erfindungsgemäßen Laufkette, deren erstes und zweites Stirnende voneinander getrennt dargestellt sind,
- Fig. 3: den in Fig. 2 dargestellten Laufkettenabschnitt, wobei hier das erste und das zweite Stirnende über eine erfindungsgemäße Verschlussvorrichtung miteinander verbunden sind,

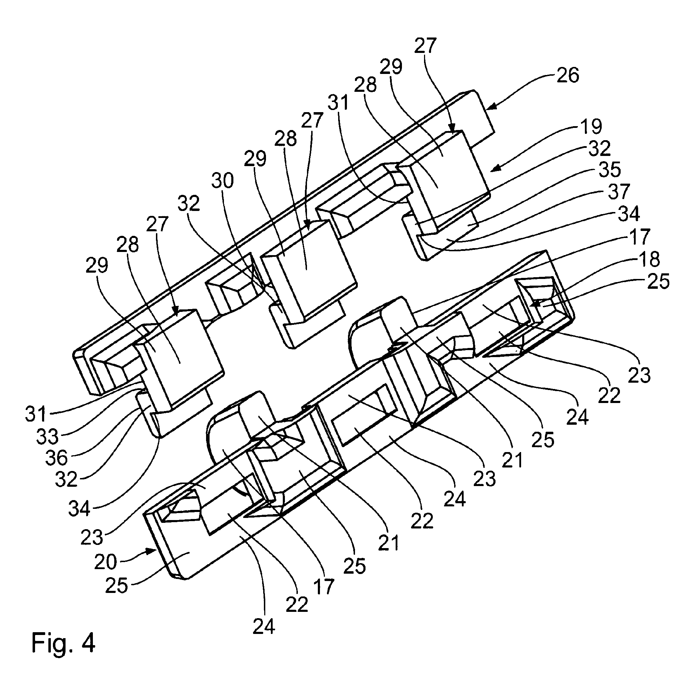

- Fig. 4: eine vergrößerte, schematische Darstellung der erfindungsgemäßen Verschlussvorrichtung in einem getrennten Zustand,

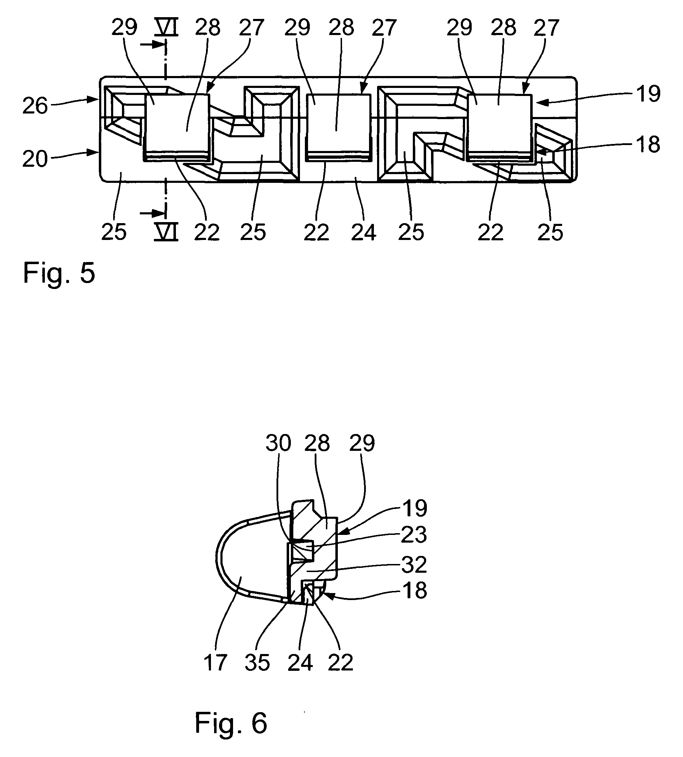

- Fig. 5: eine Draufsicht auf die in Fig. 4 dargestellte Verschlussvorrichtung, die sich in einem geschlossenen Zustand befindet,
- Fig. 6: einen Schnitt durch die in Fig. 5 gezeigte Verschlussvorrichtung gemäß der Schnittlinie VI-VI, und
- Fig. 7, 8 und 9: eine Abfolge, die die Verbindung des ersten und zweiten Stirnendes miteinander über die Verschlussvorrichtung veranschaulicht.

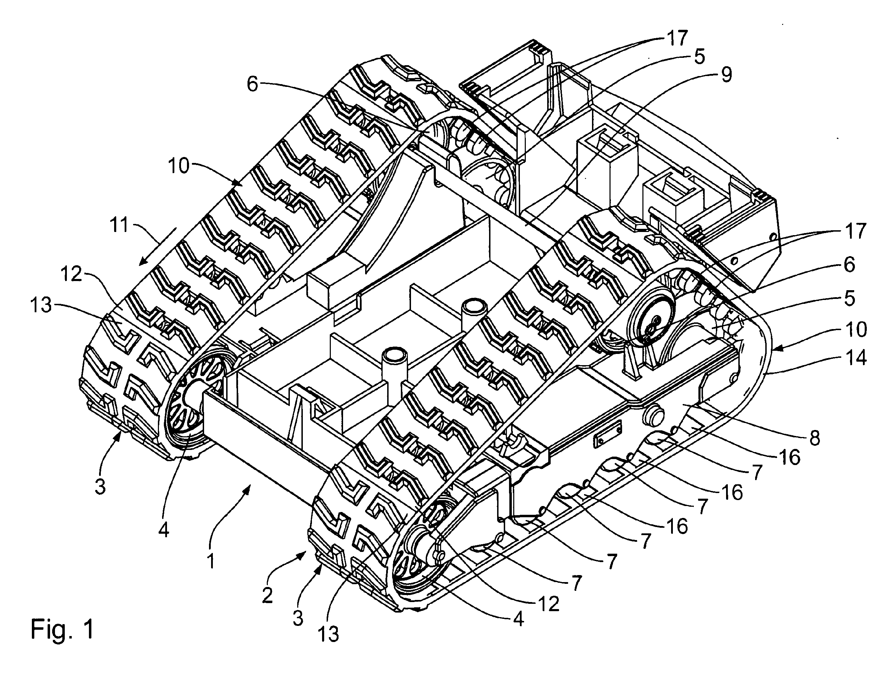

Die nachfolgend verwendeten Ausdrücke "innen", "außen", "vorne", "hinten", "oben" oder dergleichen beziehen sich auf die bestimmungsgemäße Anordnung des Fahrgestells bzw. der Laufketten, wie sie in Fig. 1 gezeigt ist.

In Fig. 1 ist ein Fahrgestell 1 dargestellt, das Bestandteil eines Spielfahrzeugs ist. Das Fahrgestell 1 weist ein Kettenlaufwerk 2 auf, das zwei identische Laufketten 3 umfasst. Es ist über die beiden seitlichen Laufketten 3 gegenüber einer Fahrfläche, wie einem Boden, einem Tisch oder dergleichen, abgestützt und ermöglicht eine Fahrbewegung des Spielfahrzeugs. Das Fahrgestell 1 ist im Wesentlichen bezüglich einer vertikalen Symmetrieebene symmetrisch ausgebildet.

An dem Fahrgestell 1 sind vorne zwei Führungsräder 4 drehbar gelagert, die sich seitlich an dem Fahrgestell 1 befinden und einander gegenüberliegen. An dem Fahrgestell 1 sind ferner hinten zwei Führungsräder 5 drehbar gelagert, die sich seitlich an dem Fahrgestell 1 befinden und einander gegenüberliegen. Die vorderen Führungsräder 4 können auf einer gemeinsamen Achse angeordnet sein, die dann in dem Fahrgestell 1 gelagert ist. Sie können aber auch auf zwei einzelnen, voneinander unabhängigen Achskörpern angeordnet sein, die dann getrennt in dem Fahrgestell 1 gelagert sind. An dem Fahrgestell 1 sind außerdem zwei Führungsräder 6 drehbar gelagert, die sich seitlich an dem Fahrgestell 1 befinden und einander gegenüberliegen. Die Führungsräder 6 sind benachbart zu den hinteren Führungsrädern 5 an dem Fahrgestell 1 angeordnet. Sie sind oberhalb der vorderen Führungsräder 4 und der hinteren Führungsräder 5 angeordnet.

Zwischen den vorderen Führungsrädern 4 und den hinteren Führungsrädern 5 befinden sich jeweils mehrere, kleinere Laufräder 7. Die Laufräder 7 sind in zwei länglichen Tragkörpern 8 drehbar gelagert, die mit den benachbarten Führungsrädern 4, 5 bzw. mit den diesen zugeordneten Achsen bzw. Achskörpern in direkter Verbindung stehen.

Jede Laufkette 3 ist um ein vorderes Führungsrad 4, ein hinteres Führungsrad 5 und ein oberes Führungsrad 6 geführt und liegt über einen Teilbereich an diesen außen an. Die Laufketten 3 sind somit im Wesentlichen dreieckförmig geführt. Die Räder 4, 5, 6 und 7 liegen innenseitig an den Laufketten 3 an.

Nachdem die Laufketten 3 identisch ausgebildet sind, wird nachfolgend nur eine Laufkette 3 im Detail beschrieben. Diese wird zunächst in ihrem offenen bzw. unverschlossenen Zustand beschrieben.

Jede Laufkette 3 umfasst ein äußeres Laufband 10 mit einer einstückig zusammenhängenden Lauffläche. Das Laufband 10 und insbesondere dessen Lauffläche ist elastisch ausgeführt. Das Laufband 10 ist insgesamt einstückig ausgebildet und aus Gummi hergestellt. Alternativ kann das Laufband 10 zusätzlich zur einstückig ausgeführten Lauffläche noch weitere, hiervon lösbare Komponenten aufweisen. Das Laufband 10 erstreckt sich entlang einer Längsrichtung 11. Es weist ein erstes Stirnende 12 und ein zweites Stirnende 13 auf, die in Längsrichtung 11 zueinander beanstandet sind und einander gegenüberliegen. Die Stirnenden 12, 13 verlaufen parallel zueinander und erstrecken sich senkrecht zu der Längsrichtung 11. Ferner hat jedes Laufband 10 zwei einander gegenüberliegende Seitenränder 14, die parallel zueinander verlaufen und sich rechtwinklig zu den Stirnenden 12, 13 erstrecken. Die Laufbänder 10 weisen außenseitig jeweils eine Vielzahl von Profilstegen 15 auf, die in Längsrichtung 11 zueinander beabstandet sind und zur Auflage auf der Fahrfläche vorgesehen sind.

Ferner umfasst jede Laufkette 3 eine Vielzahl von Tragplatten 16, die innenseitig mit dem Laufband 10 in direkter Verbindung stehen. Die Tragplatten 16 erstrecken sich zwischen den Seitenrändern 14 der Laufbänder 10 und verlaufen im Wesentlichen parallel zu den Stirnenden 12, 13. Sie sind in der Längsrichtung 11 beabstandet zueinander angeordnet.

Von jeder Tragplatte 16 springen zwei Führungsansätze 17 von der dem Laufband 10 abgewandten Seite vor. Die Führungsansätze 17 an einer Tragplatte 16 erstrecken sich parallel zueinander und sind einstückig mit der jeweiligen Tragplatte 16 ausgebildet. Sie dienen zur sicheren Führung des Laufbands 10 um die Führungsräder 4, 5, 6, 7. Die Führungsansätze 17 können seitlich außen an den Führungsrädern 4, 5, 6 anliegen. Sie können aber auch in Ausnehmungen in den Führungsrädern 4, 5, 6, 7 eingreifen, die nach radial außen offen sind. Die Führungsansätze 17 verhindern, dass die Laufbänder 10 seitlich von den Führungsrädern 4, 5, 6, 7 laufen bzw. rutschen können.

An dem ersten Stirnende 12 des Laufbands 10 ist eine erste Verschlusseinrichtung 18 vorgesehen. An dem zweiten Stirnende 13 des Laufbands 10 befindet sich eine zweite Verschlusseinrichtung 19. Die Verschlusseinrichtungen 18, 19 bilden zusammen eine Verschlussvorrichtung, die zum Schließen des Laufbands 10 bzw. zum Verbinden des ersten Stirnendes 12 und des zweiten Stirnendes 13 miteinander dient. Die erste Verschlusseinrichtung 18 und die zweite Verschlusseinrichtung 19 sind lösbar miteinander verbindbar und sind entsprechend aneinander angepasst. Sie können über Formschluss miteinander verbunden werden. Die Verschlusseinrichtungen 18, 19, die Tragplatten 16 und die Führungsansätze 17 sind aus einem identischen Kunststoffmaterial gebildet.

Die erste Verschlusseinrichtung 18 umfasst ein erstes Tragplattenteil 20, das an dem ersten Stirnende 12 innenseitig auf dem Laufband 10 angeordnet ist und sich entlang des Stirnendes 12 erstreckt. Das erste Tragplattenteil 20 verläuft somit parallel zu den Tragplatten 16 und erstreckt sich zwischen den Seitenrändern 14. Von dem ersten Tragplattenteil 20 springen zwei Führungsansätze 17 von der dem Laufband 10 abgewandten Seite vor. Diese Führungsansätze 17 stehen längs des Laufbands 10 über dieses unter Bildung einer Anlagefläche 21 vor. In dem Tragplattenteil 20 sind drei identische, fensterartige Öffnungen 22 vorgesehen, die senkrecht zu der Längsrichtung 11 des Laufbands 10 nebeneinander angeordnet sind und jeweils eine rechteckige Form aufweisen. Die Öffnungen 22 sind somit umfangsseitig geschlossen. Die Führungsansätze 17 sind zwischen der zentralen Öffnung 22 und den äußeren Öffnungen 22 angeordnet. Die Öffnungen 22 werden durch einen ersten Längssteg 23 begrenzt, der im Wesentlichen mit dem ersten Stirnende 12 fluchtet. Ferner werden die Öffnungen 22 durch einen zweiten Längssteg 24 begrenzt, der parallel zu dem Längssteg 23 verläuft. Der zweite Längssteg 24 verläuft beabstandet zu dem ersten Stirnende 12. Seitlich werden die Öffnungen 22 jeweils durch Seitenwände 25 begrenzt. Der Längssteg 24 weist eine geringere Höhe als der Längssteg 23 auf. Als Höhe wird hier der Abstand von dem Laufband 10 aus verstanden. Das Tragplattenteil 20 und die beiden diesem zugeordneten Führungsansätze 17 sind einstückig ausgebildet. Die Längstege 23, 24 und die Seitenwände 25 sind Bestandteil des ersten Tragplattenteils 20, das einstückig ausgebildet ist.

Die zweite Verschlusseinrichtung 19 weist ein zweites Tragplattenteil 26 auf, das sich entlang des zweiten Stirnendes 13 erstreckt und im Wesentlichen innenseitig auf dem Laufband 10 angeordnet ist. Die zweite Verschlusseinrichtung 19 umfasst drei Eingriffskörper 27, die identisch ausgebildet sind und beabstandet zueinander angeordnet sind. Sie sind senkrecht zu der Längsrichtung 11 nebeneinander angeordnet. Die Eingriffskörper 27 sind zum Eingriff bzw. zur Wechselwirkung mit den Öffnungen 22 vorgesehen. Sie weisen jeweils einen Ansatzabschnitt 28 auf, der von dem Tragplattenteil 26 längs des Laufbands 10 über dieses übersteht. Jeder Ansatzabschnitt 28 ist plattenförmig ausgebildet und hat eine Außenseite 29 sowie eine der Außenseite 29 gegenüberliegende Innenseite 30. Die Innenseite 30 geht im Wesentlichen von der Außenseite des Tragplattenteils 26 aus. Die Außenseite 29 liegt im Wesentlichen in der Ebene des benachbarten Abschnitts des Laufbands 10. An den Ansatzabschnitt 28 schließt sich beabstandet zu dem Tragplattenteil 26 unter Bildung einer nach innen offenen Ausnehmung 31 ein plattenartiger Durchdringungsabschnitt 32 an, der senkrecht zu dem Ansatzabschnitt 28 verläuft und sich in Richtung der zugeordneten Führungsansätze 17 erstreckt. Jeder Durchdringungsabschnitt 32 hat eine dem Tragplattenteil 26 zugewandte Innenseite 33 und eine der Innenseite 33 gegenüberliegende Außenseite 34. An den Durchdringungsabschnitt 32 schließt sich jeweils endseitig ein plattenartiger Hintergreifabschnitt 35 an, der parallel, aber versetzt zu dem jeweiligen Ansatzabschnitt 28 verläuft. Der Hintergreifabschnitt 35 weist eine Innenseite 36 und eine der Innenseite 36 gegenüberliegende Außenseite 37 auf. Die Innenseite 36 liegt im Wesentlichen in der Ebene der Innenseite des Tragplattenteils 26, während dessen Außenseite 37 etwas beabstandet zu der Innenseite des Laufbands 10 verläuft. Die zweite Verschlusseinrichtung 19 ist einstückig ausgebildet. Insbesondere sind das zweite Tragplattenteil 26 und die Eingriffskörper 27 einstückig.

Die beiden Tragplattenteile 20, 26 bilden zusammen im Wesentlichen eine Tragplatte 16.

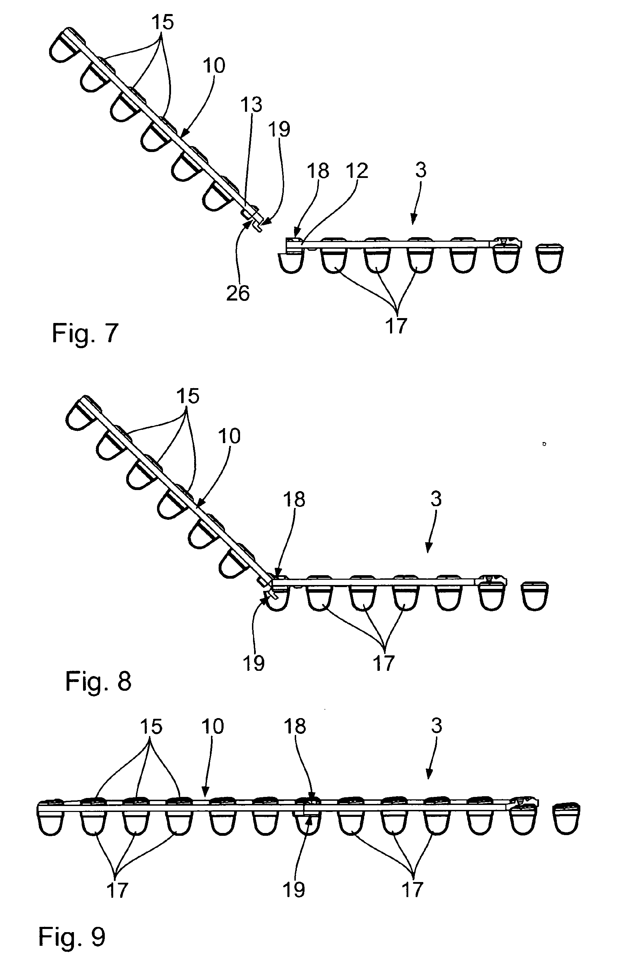

Nachfolgend wird unter Bezugnahme auf die Fig. 7 bis 9 die Herstellung der Verbindung zwischen dem ersten Stirnende 12 und dem zweiten Stirnende 13 beschrieben, um aus einer offenen Laufkette 3 eine geschlossene, endlose Laufkette 3 zu bilden. Dafür sind die Eingriffskörper 27 in die Öffnungen 22 zu führen und mit diesen in Eingriff zu bringen. Die Eingriffskörper 27 sind, wie aus den Fig. 7 und 8 hervorgeht, schräg in die Öffnungen 22 zu führen, wobei die freien Enden der Hintergreifabschnitte 35 vorauseilend sind. Wenn die Außenseiten 34 der Durchdringungsabschnitte 32 mit dem Längssteg 24 in Verbindung gelangen, sind die Eingriffskörper 27 so zu schwenken, dass die Tragplattenteile 20, 26 dann im Wesentlichen in einer gemeinsamen Ebene liegen. Die Stirnenden 12, 13 bzw. die Tragplattenteile 20, 26 sind dann unmittelbar benachbart zueinander angeordnet und können aneinander anliegen. Die Anlageflächen 21 der Führungsansätze 17 liegen innenseitig an dem Tragplattenteil 26 an. Der Längssteg 23 liegt in den an diesen angepassten Ausnehmungen 31. Die Ansatzabschnitte 28 liegen außenseitig an dem Längssteg 23 an, während die Durchdringungsabschnitte 32 die Öffnungen 22 durchsetzen. Die Innenseite 33 von jedem Durchdringungsabschnitt 32 liegt an dem Längssteg 23 an bzw. ist unmittelbar benachbart zu diesem angeordnet. Die Außenseite 34 von jedem Durchdringungsabschnitt 32 liegt an dem Längssteg 24 an bzw. ist sie unmittelbar benachbart zu diesem angeordnet. Die Hintergreifabschnitte 35 liegen innenseitig mit ihren Außenseiten 37 an dem Längssteg 24 an. Die Eingriffskörper 27 stehen somit mit den Öffnungen 22 in formschlüssiger Verbindung. Sie sind in diese eingehakt. Durch die beschriebene Verbindung zwischen den Eingriffskörpern 27 und den Öffnungen 22 wird erreicht, dass die Stirnenden 12, 13 im Wesentlichen in sämtlichen Richtungen unbeweglich aneinander fixiert sind. Die Fixierung liegt sowohl längs der Laufkette 3 als auch quer zu dieser vor.

Die Trennung der Stirnenden 12, 13 voneinander erfolgt im Wesentlichen analog. Hierzu ist wieder zunächst eine entsprechende Schwenkkraft aufzubringen. Dann sind die Eingriffskörper 27 aus den Öffnungen 22 zu führen.

Die Verschlussvorrichtung, die Tragplatten 16 und die Führungsansätze 17 sind aus einem identischen Kunststoffmaterial gespritzt. Diese werden in entsprechenden Formen hergestellt. Das Laufband 10 wird dann aus Gummi oder einem gummiähnlichen Material auf die Tragplatten 16 bzw. die Tragplattenteile 20, 26 gespritzt, so dass zwischen dem Laufband 10 und den Tragplatten 16 bzw. den Tragplattenteilen 20, 26 eine feste Verbindung entsteht. Die Laufkette 3 ist somit durch 2K-Spritzen hergestellt.

## Patentansprüche

1. Laufkette für ein Spielfahrzeug, umfassend
- ein Laufband (10) mit einstückig zusammenhängender Lauffläche mit
-- einem ersten Stirnende (12) und
-- einem zweiten Stirnende (13),
- an dem Laufband (10) angebrachte Führungskörper (17) zur Führung des Laufbands (10), und
- eine Verschlussvorrichtung zum Schließen des Laufbands (10), umfassend
-- eine an dem ersten Stirnende (12) vorgesehene erste Verschlusseinrichtung (18), und
-- eine an dem zweiten Stirnende (13) vorgesehene zweite Verschlusseinrichtung (19) zur lösbaren, vorzugsweise formschlüssigen, Verbindung mit der ersten Verschlusseinrichtung (18),
- wobei die erste Verschlusseinrichtung (18) mindestens ein erstes Verschlussmittel (22) und die zweite Verschlusseinrichtung (19) mindestens ein zweites Verschlussmittel (27) zur lösbaren Verbindung mit dem ersten Verschlussmittel (22) umfasst,
- und wobei das mindestens eine erste Verschlussmittel (22) als Ausnehmung und das mindestens eine zweite Verschlussmittel (27) als Eingriffskörper zum Eingreifen in die Ausnehmung (22) ausgebildet ist, **dadurch gekennzeichnet, dass**
- der Eingriffskörper (27) aufweist
-- einen längs des Laufbands (10) über dieses überstehenden Ansatzabschnitt (28),
-- einen im Wesentlichen senkrecht zu dem Ansatzabschnitt (28) verlaufenden und sich an diesen anschließenden Durchdringungsabschnitt (32) zum Durchdringen der Ausnehmung (22), und
-- einen im Wesentlichen senkrecht zu dem Durchdringungsabschnitt (32) verlaufenden und sich an diesen anschließenden Hintergreifabschnitt (35) zum Hintergreifen eines die Ausnehmung (22) begrenzenden Randabschnitts (24).

2. Laufkette nach Anspruch 1, **dadurch gekennzeichnet, dass** mindestens zwei erste Verschlussmittel (22) vorgesehen sind, die quer zu einer Längserstreckung des Laufbands (10) nebeneinander angeordnet sind, und wobei mindestens zwei zweite Verschlussmittel (27) vorgesehen sind, die quer zu der Längserstreckung des Laufbands (10) nebeneinander angeordnet sind.

3. Laufkette nach Anspruch 1 oder 2, **dadurch gekennzeichnet, dass** die erste Verschlusseinrichtung (18) einen mit dem Laufband (10) verbundenen ersten Grundkörper (20) mit mindestens einem ersten Verschlussmittel (22) aufweist, wobei vorzugsweise die zweite Verschlusseinrichtung (19) einen mit dem Laufband (10) verbundenen zweiten Grundkörper (26) mit mindestens einem zweiten Verschlussmittel (27) aufweist.

4. Laufkette nach einem der Ansprüche 1 bis 3, **dadurch gekennzeichnet, dass** die Ausnehmung (22) als Fensteröffnung für den Eingriffskörper (27) ausgebildet ist.

5. Laufkette nach einem der vorherigen Ansprüche, **dadurch gekennzeichnet, dass** mit der Verschlussvorrichtung mindestens einer der Führungskörper (17) zur Führung des Laufbands (10) verbunden ist, wobei vorzugsweise dieser mindestens eine Führungskörper (17) an der ersten Verschlusseinrichtung (18) vorgesehen ist und gegenüber dem ersten Stirnende (12) vorsteht.

6. Laufkette nach einem der vorherigen Ansprüche, **dadurch gekennzeichnet, dass** das Laufband (10) aus einem ersten Material gebildet ist, während die Verschlussvorrichtung aus einem zweiten Material gebildet ist, das eine höhere Steifigkeit als das erste Material aufweist, wobei vorzugsweise das Laufband (10) und die Verschlussvorrichtung gespritzt sind.

7. Spielzeug mit
- einem Spielfahrzeug-Grundkörper,
- mindestens einem an dem Spielfahrzeug-Grundkörper gelagerten Laufkettenrad (4, 5, 6), und
- mindestens einer Laufkette (3) nach einem der vorherigen Ansprüche, die um das mindestens eine Laufkettenrad (4, 5, 6) geführt ist.

## Claims

1. Track for a toy vehicle comprising
- a running band (10) with a one-piece continuous running surface comprising
-- a first end face (12) and
-- a second end face (13),
- guiding bodies (17) attached to the running band (10) for guiding the running band (10) and
- a locking device for locking the running band (10), comprising
-- a first locking mechanism (18) provided at the first end face (12), and
-- a second locking mechanism (19) provided at the second end face (13) for the detachable, preferably interlocking, connection with the first locking mechanism (18),
- wherein the first locking mechanism (18) comprises at least one first locking means (22) and the second locking mechanism (19) comprises at least one second locking means (17) for the detachable connection with the first locking means (22), and
- wherein the at least one first locking means (22) is in the form of a recess and the at least one second locking means (17) is in the form of an engaging body for engaging in the recess (22),
**characterised in that**
- the engaging body (27) comprises
-- a shoulder section (28) along the running band (10) protruding over the latter,
-- a penetration section (32) running essentially perpendicular to the shoulder section (28) and connecting to the latter for penetrating the recess (22) and
-- a rear gripping section (35) running essentially perpendicular to the penetration section (32) and connecting to the latter for gripping behind an edge section (24) delimiting the recess (22).

2. Track according to claim 1, **characterised in that** at least two first locking means (22) are provided which are arranged next to one another perpendicular to a longitudinal extension of the running band (10) and wherein at least two second locking means (27) are provided which are arranged next to one another perpendicular to the longitudinal extension of the running band (10).

3. Track according to claim 1 or 2, **characterised in that** the first locking mechanism (18) has a first basic body (20) connected to the running band (10) with at least one first locking means (22), wherein preferably the second locking mechanism (19) comprises a second basic body (26) connected to the running band (10) with at least one second locking mechanism (27).

4. Track according to one of claims 1 to 3, **characterised in that** the recess (22) is configured as a window opening for the engagement body (27).

5. Track according to any one of the preceding claims, **characterised in that** at least one of the guiding bodies (17) is connected to the locking mechanism for guiding the running band (10), wherein preferably said at least one guiding body (17) is provided on the first locking mechanism (18) and protrudes relative to the first end face (12).

6. Track according to one of the preceding claims, **characterised in that** the running band (10) is made from a first material whereas the locking mechanism is made from a second material which is more rigid than the first material, wherein preferably the running band (10) and the locking mechanism device are injection moulded.

7. Toy comprising
- a toy vehicle basic body,
- at least one track wheel (4, 5, 6) mounted on the toy vehicle basic body and
- at least one track (3) according to one of the preceding claims which is guided about the at least one track wheel (4, 5, 6).

## Revendications

1. Chenille pour un véhicule jouet comprenant
- une bande transporteuse (10) comportant une surface transporteuse, étant reliées ensemble en formant une seule pièce, comprenant
-- une première extrémité frontale (12) et
-- une seconde extrémité frontale (13),
- des organes de guidage (17) rapportés sur la bande transporteuse (10) pour la conduite de la bande transporteuse (10), et
- un dispositif de fermeture pour la fermeture de la bande transporteuse (10) comportant
-- un premier dispositif de fermeture (18) prévu sur la première extrémité frontale (12) et
-- un second dispositif de fermeture (19) prévu pour une liaison, pouvant être desserrée, de préférence par complémentarité de formes, avec le premier dispositif de fermeture (18),
le premier dispositif de fermeture (18) comprenant au moins un premier moyen de fermeture (22) et le second dispositif de fermeture (19) comprenant au moins un second moyen de fermeture (27) pour une liaison, pouvant être desserrée, avec le premier moyen de fermeture (22), et
- le premier moyen de fermeture (22) étant au moins conçu sous la forme d'un évidement et le second moyen de fermeture (27) étant conçu sous la forme d'un organe d'encliquetage pour l'encliquetage dans l'évidement (22),
**caractérisée en ce que**
- l'organe d'encliquetage (27) présente
-- une partie d'insertion (28) dépassant longitudinalement par-dessus la bande transporteuse (10),
-- une partie d'interpénétration (32), s'étendant principalement perpendiculairement par rapport à la partie d'insertion (28) et faisant suite à celle-ci, pour la pénétration dans l'évidement (22), et
-- une partie d'encliquetage arrière (35) s'étendant principalement perpendiculairement par rapport à la partie d'interpénétration (32) et faisant suite à celle-ci pour l'encliquetage arrière d'une partie du bord (24) délimitant l'évidement (22).

2. Chenille selon la revendication 1 **caractérisée en ce qu'**au moins deux premiers moyens de fermetures (22), qui sont disposés l'un à côté de l'autre, perpendiculairement à la direction longitudinale de la bande transporteuse (10), sont prévus et où au moins deux seconds moyens de fermeture (27), qui sont disposés l'un à côté de l'autre, perpendiculairement à la direction longitudinale de la bande transporteuse (10), sont prévus.

3. Chenille selon les revendications 1 ou 2 **caractérisée en ce que** le premier dispositif de fermeture (18) présente un premier corps de base (20), relié avec la bande transporteuse (10), comprenant au moins un premier moyen de fermeture (22), le second dispositif de fermeture (19) présentant de préférence un second corps de base (26) relié avec la bande transporteuse (10), comprenant au moins un second moyen de fermeture (27).

4. Chenille selon l'une des revendications de 1 à 3 **caractérisée en ce que** l'évidement (22) est conçu comme une ouverture de fenêtre pour l'organe d'encliquetage (27).

5. Chenille selon l'une des revendications précédentes **caractérisée en ce qu'**avec le dispositif de fermeture, au moins l'un des organes de guidage (17) est relié à la conduite de la bande transporteuse (10), au moins un organe de guidage (17) du premier dispositif de fermeture étant de préférence prévu et dépassant par rapport à la première extrémité frontale (12).

6. Chenille selon l'une des revendications précédentes **caractérisée en ce que** la bande transporteuse (10) est constituée d'un premier matériau, tandis que le dispositif de fermeture est constitué d'un second matériau qui présente une rigidité supérieure à celle du premier matériau, la bande transporteuse (10) et le dispositif de fermeture étant de préférence peints par projection.

7. Jouet comprenant
- un corps de base de véhicule jouet,
- au moins une roue à chenille (4, 5, 6) disposée sur le corps de base du véhicule jouet, et
- au moins une chenille (3), selon l'une des revendications précédentes, qui est conduite sur au moins une roue de chenille (4, 5, 6).
